# EUROPEAN PATENT APPLICATION

(11) **EP 2 821 674 A1**
(43) Date of publication of application: **07.01.2015**
(21) Application number: 13755618.9
(22) Date of filing: 07.02.2013
(51) Int. Cl.: F16H 61/16

(54) **VEHICLE SHIFT CONTROL DEVICE**

(30) Priority: 29.02.2012 JP 2012043918
(71) Applicant: Nissan Motor Company, Limited, Kanagawa-ku Yokohama-shi Kanagawa 221-0023 (JP)
(72) Inventor: TSUKIZAKI, Atsushi, Kanagawa 243-0123 (JP)
(74) Representative: Grünecker, Kinkeldey, Stockmair & Schwanhäusser
(86) International application number: PCT/JP2013/052790
(87) International publication number: WO 2013/129053

(57) **Abstract**

In order to ensure the durability and reliability of an engagement clutch and a mechanism for disengaging the engagement clutch when shifting gears, which disengages the engagement clutch, this vehicle shift control device is provided with an automatic transmission (3) positioned in a drive train from a second motor generator (MG2), and a controller (21) that controls the shifting of eh automatic transmission (3). In the hybrid vehicle shift control device, when a shift command for shifting gears is outputted due to the disengagement of the engagement clutch (8c), which is engaged due to meshing, the controller (21) delays the start of shifting while torque acting on the engagement clutch (8c) is greater than or equal to a predetermined value, and allows shifting to start when the torque acting on the engagement clutch (8c) is less than the predetermined value.

## Description

### Technical Field

This invention relates to a shift control device for a vehicle which includes an automatic transmission which is disposed in a driving system from a driving source, and which performs a shift by a disengagement of an engagement clutch.

### Background Art

Conventionally, there is known a driving control device for a vehicle (for example, a patent document 1) configured to determine a time period necessary for a disengagement from a variation amount of a stroke of a dog clutch (engagement clutch), to estimate a torque acted to the dog clutch from the determined time period, and to control so as to disengage (release) the dog clutch during a constant time period based on the estimated torque.

### Prior Art Document

### Patent Document

Patent Document 1: Japanese Patent Application Publication No. 2010-89575

### Summary of The Invention

### Problems which The Invention Is intended to Solve

However, this conventional driving control device for the vehicle is configured to estimate the torque acted to the dog clutch from the disengagement operation of the dog clutch. Accordingly, the operation of disengaging the dog clutch is performed even when the torque acted to the dog clutch is equal to or greater than an assumed value. The load which is equal to or greater than the assumed value may be acted to the dog clutch and a mechanism arranged to disengage the dog clutch. Consequently, there is a problem that it is not possible to ensure a reliability of durability of the dog clutch and the mechanism arranged to disengage the dog clutch.

It is, therefore, an object of the present invention to provide a shift control device for a vehicle devised to dissolve the above-described problems, and to ensure a reliability of a durability of an engagement clutch and a mechanism arranged to disengage the engagement clutch at a shift at which the engagement clutch is disengaged.

### Means for Solving The Problem

For attaining the above-described object, the shift control device for the vehicle according to the present invention includes an automatic transmission disposed in a driving system from a driving source, and a shift control means configured to perform a shift control of the automatic transmission.

In this shift control device for the vehicle, the shift control means is configured to retain a start of the shift while a torque which is equal to or greater than a predetermined value is acted to an engagement clutch when a shift command to shift by disengagement of the engagement clutch engaging by meshing is outputted, and to allow the start of the shift when the torque acted to the engagement clutch becomes smaller than the predetermined value.

### Benefit of The Invention

Accordingly, when the shift command to shift by the disengagement of the engagement clutch engaging by meshing is outputted, the start of the shift is retained while the torque which is equal to or greater than the predetermined value is acted to the engagement clutch. When the torque acted to the engagement clutch becomes smaller than the predetermined value, the start of the shift by the disengagement of the engagement clutch is allowed. That is, an actuation torque to the engagement clutch is monitored in a meshing engagement state of the engagement clutch. Until the actuation (acted) torque to the engagement clutch becomes smaller than the predetermined value, the start of the shift is waited. Consequently, the engagement clutch is disengaged after it is confirmed that the resistance force with respect to the clutch disengagement becomes surely small. Therefore, it is possible to prevent the load which is equal to or greater than the assumed value from acting to the engagement clutch and the mechanism arranged to disengage the engagement clutch.

Therefore, it is possible to ensure the reliability of the durability of the engagement clutch and the mechanism arranged to disengage the engagement clutch at the shift at which the engagement clutch is disengaged.

### Brief Description of Drawings

FIG. 1 is an overall schematic view showing a driving system configuration and a shift control system configuration of a hybrid vehicle to which a shift control device according to a first embodiment is applied.
FIG. 2 is a shift map view showing one example of an upshift line and a downshift line of the automatic transmission in the shift control device according to the first embodiment.
FIG. 3 is a flowchart showing a flow of a shift control operation at an accelerator foot release upshift, which is performed in the controller according to the first embodiment.
FIG. 4 is a time chart showing characteristics of a vehicle G, a motor rotation speed, a motor generator torque, an engagement clutch transmission torque, a frictional clutch transmission torque, and engagement/disengagement of an engagement clutch when the accelerator foot release upshift (1st→2nd) is performed in the first embodiment.
FIG. 5 is a time chart showing a variation of the vehicle G and a variation of the motor rotation speed after a shift command is outputted at the accelerator foot release upshift (1st→2nd) in the first embodiment.
FIG. 6 is a schematic view showing one example of a driving system for an electric vehicle in a case where the shift control according to the present invention is applied to the electric vehicle.

### Description of Embodiments

Hereinafter, a best mode which attains a shift control device for a vehicle according to the present invention is explained based on a first embodiment shown in drawings.

### First Embodiment

First, a structure is explained.

A structure of the shift control device of a hybrid vehicle (one example of a vehicle) according to the first embodiment is explained as to "a driving system structure", "a shift control system structure", and "a foot release upshift control structure".

### [Driving System Structure]

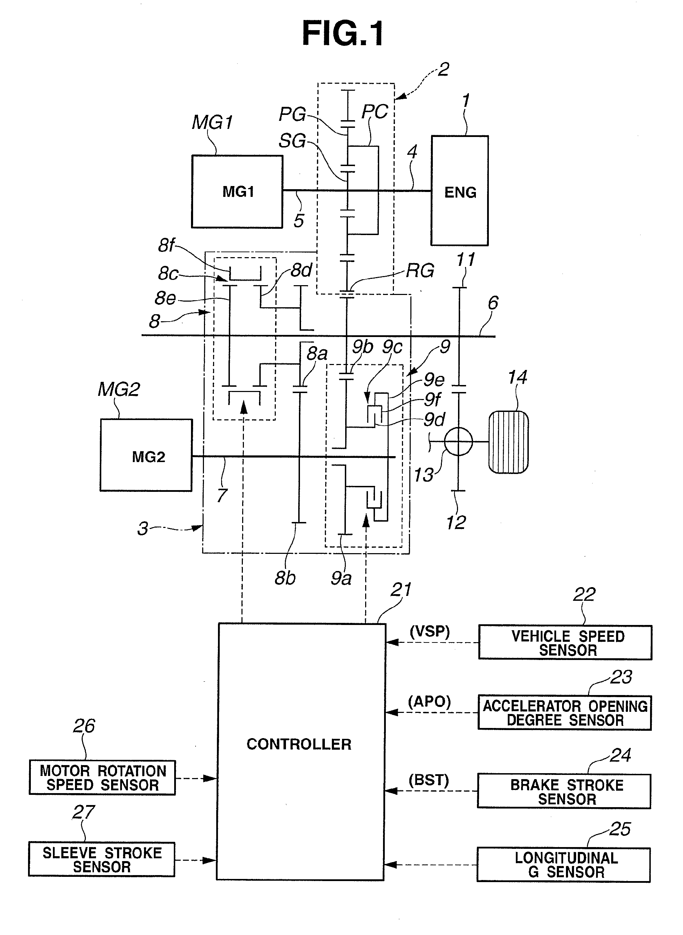

FIG. 1 shows a structure of the driving system of the hybrid vehicle to which the shift control device according to the first embodiment is applied. Hereinafter, the structure of the driving system is explained based on FIG. 1.

As shown in FIG. 1, the driving system configuration according to the first embodiment includes an engine 1, a first motor generator MG1, a second motor generator MG2 (electric motor), a power distribution device (power transfer) 2, and an automatic transmission 3.

The engine 1 is an internal combustion engine. The engine 1 includes an engine output shaft 4 which is a crank shaft, and which is connected with a pinion carrier PC of the power distribution device 2.

The first motor generator MG1 is mainly used as a generator. The first motor generator MG1 includes a first motor output shaft 5 which is disposed coaxially to the engine output shaft 4, and which is connected with a sun gear SG of the power distribution device 2.

The second motor generator MG2 is mainly used as an electric motor. The second motor generator MG2 includes a motor shaft which is connected with a transmission input shaft 7 of the automatic transmission 3.

In this case, the transmission input shaft 7 and a transmission output shaft 6 of the automatic transmission 3 are disposed, respectively, in parallel to arrangement shaft lines of the both output shafts 4 and 5 which are disposed coaxially to each other.

The power distribution device 2 is arranged to distribute the power of the engine 1 to the first motor generator MG1 and the transmission output shaft 6 of the automatic transmission 3. The power distribution device 2 is constituted by a simple planetary gear set. The simple planetary gear set includes a center sun gear SG, a ring gear RG which surrounds the sun gear SG, and which is concentric with the sun gear SG, a plurality of pinions PG which are engaged with the sun gear SG and the ring gear RG, and a pinion carrier PC which rotatably supports the pinions PG. In the three rotation members (SG, PC, RG) of the power distribution device 2, the pinion carrier PC is connected with the engine 1, the sun gear SG is connected with the first motor generator MG1, and the ring gear RG is engaged with a gear 9b disposed on the transmission output shaft 6.

The automatic transmission 3 is a normally-engaged transmission arranged to transmit the power by one (either) of two gear pairs having different transmission gear ratios. The automatic transmission 3 has two stepped shift including a high gear stage (high speed stage) having a small reduction ratio, and a low gear stage (low speed stage) having a large reduction ratio. This automatic transmission 3 is used for a shift when the motor power is outputted from the second motor generator MG2 through the transmission input shaft 7 and the transmission output shaft 6. The automatic transmission 3 includes a low side shift mechanism 8 arranged to attain the low speed stage, and a high side shift mechanism 9 arranged to attain the high speed stage.

The low side shift mechanism 8 is arranged to select the low side transmission path at the output of the motor power. The low side shift mechanism 8 is disposed on the transmission output shaft 6. This low side shift mechanism 8 includes low speed stage gear pairs (a gear 8a and a gear 8b) which are arranged to perform a rotation engagement/rotation engagement disengagement of the gear 8a with respect to the transmission output shaft 6 so as to drivingly connect the transmission output shaft 6 and the transmission input shaft 7. The low side shift mechanism 8 is constituted by an engagement clutch 8c which is engaged by a synchronous meshing. In this case, the low speed gear pairs include the gear 8a which is rotationally supported on the transmission output shaft 6, and the gear 8b which is meshed with the gear 8a, and which is rotated together with the transmission input shaft 7.

The engagement clutch 8c includes a clutch gear 8d which is provided to the gear 8a, a clutch hub 8e which is connected with the transmission output shaft 6, and a coupling sleeve 8f. The clutch gear 8d and the clutch hub 8e include, respectively, clutch teeth which are formed on outer circumferences of the clutch gear 8d and the clutch hub 8e, and which have the same specification.

When the coupling sleeve 8f is positioned at a meshing position which is shown in FIG. 1, and at which the coupling sleeve 8f is engaged with the outer circumference clutch teeth of the clutch gear 8d and the clutch hub 8e, the engagement clutch 8c connects the gear 8a to the transmission output shaft 6. On the other hand, when the coupling sleeve 8f is positioned at a non-meshing position at which the coupling sleeve 8f is not engaged with one of the outer circumference clutch teeth of the clutch gear 8d and the clutch hub 8e by shifting in the axial direction from the position shown in FIG. 1, the engagement clutch 8c separates the gear 8a from the transmission output shaft 6. Besides, the axial shift of the coupling sleeve 8f is performed by an actuator (not shown).

The high side shift mechanism 9 is arranged to select the high side transmission path at the output of the motor power. The high side shift mechanism 9 is disposed on the transmission input shaft 7. This high side shift mechanism 9 includes high speed stage gear pairs (a gear 9a and a gear 9b) which is arranged to perform a frictional connection/frictional connection disengagement of the gear 9a with respect to the transmission input shaft 7 so as to drivingly connect the transmission output shaft 6 and the transmission input shaft 7. The high side shift mechanism 9 is constituted by a frictional clutch 9c which is a hydraulic frictional engagement, as described below. In this case, the high speed stage gear pairs include the gear 9a which is rotatably supported on the transmission input shaft 7, and the gear 9b which is engaged with the gear 9a, and which is rotated together with the transmission output shaft 6.

The frictional clutch 9c includes a driven side clutch disc 9d which is rotated together with the gear 9a, a driving side clutch disc 9e which is rotated together with the transmission input shaft 7, and a hydraulic clutch piston 9f. The frictional clutch 9c functions as follows. When the clutch piston 9f performs the engagement operation to frictionally contact the clutch discs 9d and 9e by the actuation hydraulic pressure, the frictional clutch 9c drivingly connects the gear 9a to the transmission input shaft 7. On the other hand, when the clutch piston 9f performs the disengagement operation to disengage the frictional contact of the clutch discs 9d and 9e by draining the actuation hydraulic pressure, the frictional clutch 9c separates the driving connection of the gear 9a and the transmission input shaft 7.

A gear 11 is fixed on the transmission output shaft 6. A differential gear device 13 is drivingly connected to the transmission output shaft 6 through a final drive gear set including this gear 11 and a gear 12 engaged with this gear 11. With this, the motor power of the second motor generator MG2 reaching the transmission output shaft 6 is transmitted to left and right driving wheels 14 (besides, FIG. 1 shows the only one of the driving wheels) through the final drive gear set 11 and 12, and the differential gear device 13.

### [Shift Control System Configuration]

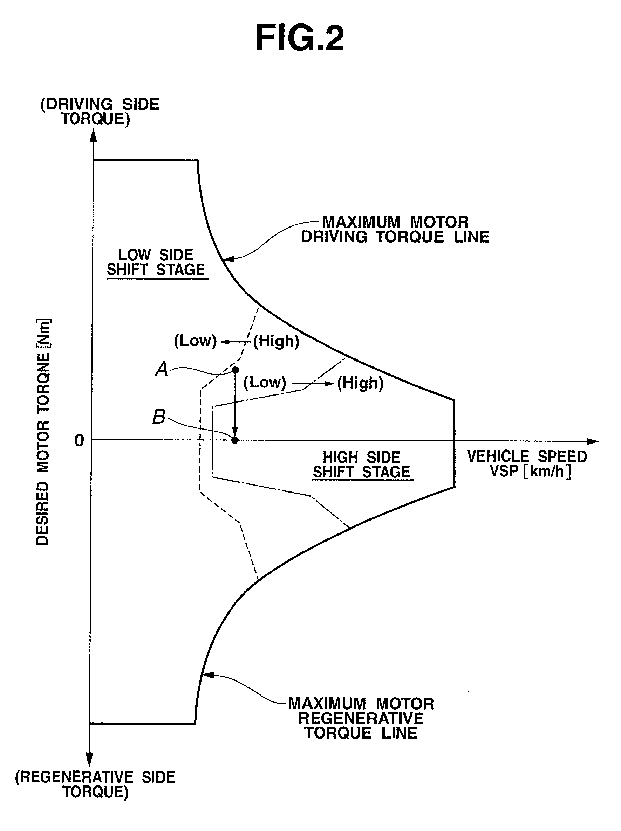

FIG. 1 shows a shift control system configuration of the hybrid vehicle to which the shift control device according to the first embodiment is applied. FIG. 2 shows a shift map of the automatic transmission. Hereinafter, the shift control system configuration is explained based on FIG. 1 and FIG. 2.

As shown in FIG. 1, the shift control system structure according to the first embodiment includes a controller 21, a vehicle speed sensor 22, an accelerator opening degree sensor 23, a brake stroke sensor 24, a longitudinal G sensor 25, a motor rotation speed sensor 26, a sleeve stroke sensor 27, and so on.

At the shift of the automatic transmission 3, the controller 21 performs a shift switching control of the meshing/non-meshing of the engagement clutch 8c (the coupling sleeve 8f), and a hydraulic pressure actuation control of the disengagement/the engagement of the frictional clutch 9c (the clutch piston 9f). This controller 21 receives a vehicle speed VSP from the vehicle speed sensor 22, an accelerator opening degree APO from the accelerator opening degree sensor 23, and a brake stroke amount BST from the brake stroke sensor 24. Then, this shift controller 21 performs the shift control of the automatic transmission 3 based on the shift map exemplified in FIG. 2 from these input information, as described below.

In the shift map of FIG. 2, a bold solid line shows a maximum motor driving torque line obtained by connecting maximum motor driving torque values of the second motor generator MG2 at respective vehicle speeds, and a maximum motor regenerative torque line obtained by connecting maximum motor regenerative torque values of the second motor generator MG2 at respective vehicle speeds. A region surrounded by these is an actual use permission region.

In this actual use permission region, an upshift line (Low→High) shown by one dot line and a downshift line (High→Low) shown by a broken line are set in consideration of a transmission loss of the automatic transmission 3 and a motor loss of the second motor generator 2. Besides, the upshift line (Low→High) is set on the higher vehicle speed side by a hysteresis amount, relative to the downshift line (High→Low).

When the accelerator pedal is depressed, the controller 21 determines a driving point from a desired motor driving torque determined from the accelerator opening degree APO, and the vehicle speed VSP. When the brake pedal is depressed, the controller 21 determines the driving point by the desired motor regenerative torque determined from the brake stroke amount BST, and the vehicle speed VSP.

After the driving point is determined, a target shift stage (the low speed stage (low shift stage) or the high speed stage (high shift stage)) which is preferable for the current driving state is determined by whether the driving point exists in the low side shift stage region or the high side shift stage region of the shift map of FIG. 2.

Next, when the determined target shift stage is the low speed stage, the low speed stage in which the engagement clutch 8c is brought to the engagement state and the frictional clutch 9c is brought to the disengagement state is selected. Moreover, when the determined target shift stage is the high speed stage, the high speed stage in which the frictional clutch 9c is brought to the engagement state and the engagement clutch 8c is brought to the disengagement state is selected.

In case of the state of selecting the low speed stage (the actual shift stage = the low speed stage), when the driving point within the actual use permission region enters the high side shift stage region beyond the upshift line (Low→High), the target shift stage is selected to the high speed stage, and the automatic transmission 3 is upshifted from the low speed stage to the high speed stage. On the other hand, in case of the state of selecting the high speed stage (the actual shift stage = the high speed stage), when the driving point within the actual use permission region enters the low side shift stage region beyond the downshift line (High→Low), the target shift stage is switched to the low speed stage, and the automatic transmission 3 is downshifted from the high speed stage to the low speed stage.

### [Foot Release Upshift Control Configuration]

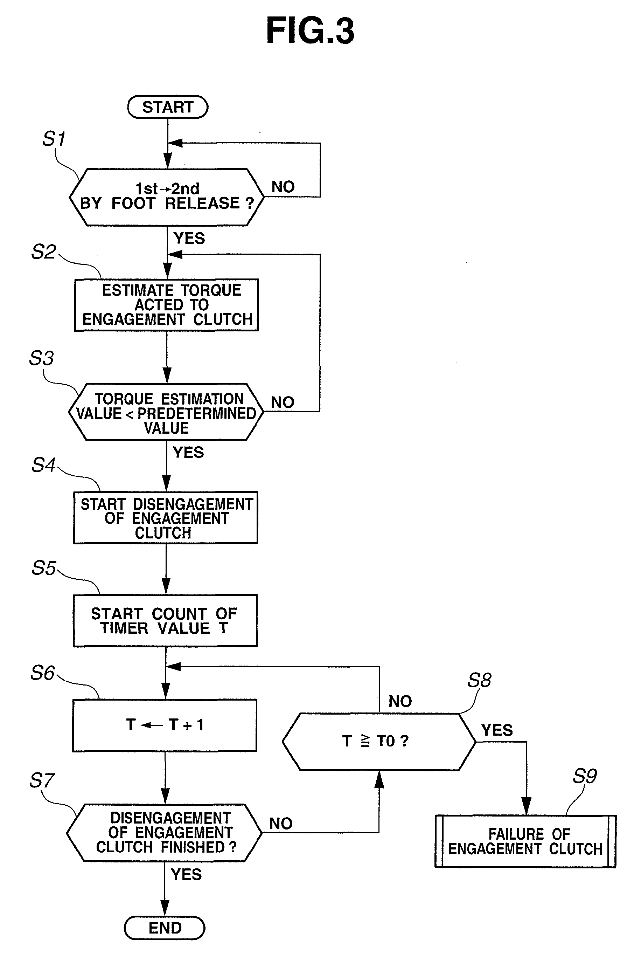

FIG. 3 shows a flow of a foot release upshift control operation performed in the controller 21 according to the first embodiment (shift control means). Hereinafter, steps of FIG. 3 showing the foot release upshift control operation configuration are explained.

At step S1, it is judged whether or not a shift command from the low speed stage (1st) to the high speed stage (2nd) by releasing the foot from the accelerator is outputted. In case of YES (the foot release 1st→2nd), the process proceeds to step S2. In case of NO (a case other than the foot release 1st→2nd), the process repeats the judgment of step S1.

Subsequently to the judgment of the command output of the foot release 1st→2nd at step S1, or a judgment of a torque estimation value ≥ a predetermined value, at step S2, a torque acted to the engagement clutch 8c is estimated, and the process proceeds to step S3. In this case, the torque acted to the engagement clutch 8c is estimated from the input torque from the second motor generator MG2 to the engagement clutch 8c, and the longitudinal acceleration of the vehicle, or estimated from the input torque from the second motor generator MG2 to the engagement clutch 8c, and a variation amount of the rotation speed of the driving system.

Besides, the input torque to the engagement clutch 8c is sensed by a command current to the second motor generator MG2. The longitudinal acceleration of the vehicle is sensed by a sensor value from the longitudinal G sensor 25. The variation amount of the rotation speed of the driving system is obtained by a time (temporal) differentiation of the motor rotation speed sensed by the sensor value from the motor rotation speed sensor 26.

Subsequently to the estimation of the torque acted to the engagement clutch 8c at step S2, at step S3, it is judged whether or not the torque estimation value acted to the engagement clutch 8c which is estimated at step S2 is smaller than the predetermined value. In case of YES (the torque estimation value < the predetermined value), the process proceeds to step S4. In case of NO (the torque estimation value ≥ the predetermined value), the process proceeds to step S2.

In this case, "the predetermined value" is set to a value (a small torque value near zero) corresponding to a resistance force which does not provide a load equal to or greater than the assumed value, to the clutch disengagement mechanism when the engagement clutch 8c is disengaged.

Subsequently to the torque estimation value < the predetermined value at step S3, at step S4, the engagement clutch 8c which is engaged (in the engagement state (in the meshing state)) at the low speed stage (1st) is started to shift to the disengagement (in the disengagement state(in the non-meshing state)). The process proceeds to step S5.

Subsequently to the start of the disengagement of the engagement clutch 8c at step S4, at step S5, a time value T for measuring an elapsed time period from the start of the disengagement of the engagement clutch 8c is started to be counted. The process proceeds to step S6.

Subsequently to the start of the timer count at step S5, or the judgment of T<T0 at step S8, at step S6, the timer value T is added at each time at which it passes at each determined time period. The process proceeds to step S7.

Subsequently to the addition of the timer value at step S6, at step S7, it is judged whether or not the disengagement of the engagement clutch 8c is finished. In case of YES (the disengagement of the engagement clutch is finished), the process proceeds to an end. In case of NO (the disengagement of the engagement clutch is not finished), the process proceeds to step S8.

In this case, the judgment of the completion of the disengagement of the engagement clutch 8c is performed by whether or not the stroke position of the coupling sleeve 8f from the sleeve stroke sensor 27 reaches a disengagement completion judgment position of the engagement clutch 8.

Subsequently to the non-completion of the disengagement of the engagement clutch 8c at step S7, at step S8, it is judged whether or not the timer value T at that time is equal to or greater than a clutch failure judgment threshold value T0. In case of YES (T≥0), the process proceeds to step S9. In case of NO (T<T0), the process proceeds to step S6.

In this case, the clutch failure judgment threshold value T0 is set by adding a monitoring time period for eliminating the failure erroneous judgment (determination), to a maximum time period necessary for from the start of the disengagement of the engagement clutch 8c to the completion of the disengagement of the engagement clutch 8c when the engagement clutch 8c and the clutch disengagement mechanism is in the normal state.

Subsequently to the judgment of T≥T0 at step S8, at step S9, it is diagnosed that the engagement clutch 8c and the clutch disengagement mechanism are in the failure state.

Besides, when it is diagnosed that the engagement clutch 8c is in the failure state, it is informed to a driver by a lightning of an alarm lamp provided to an instrument panel, and so on.

Next, an operation is explained.

The operation of the shift control device of the hybrid vehicle according to the first embodiment are explained as to "a basic driving operation by hybrid driving system", "foot release upshift control operation", "operation of estimation of torque acted to engagement clutch", and "operation of diagnosis of failure of engagement clutch".

### [Basic Driving Operation by Hybrid Driving System]

First, a basic driving operation by the hybrid driving system is explained.

The engine 1 drives the first motor generator MG1 through the power distribution device 2. The electric power generated by this first motor generator MG1 is stored in a battery (not shown).

The second motor generator MG2 is driven by obtaining the above-described electric power of the battery. The motor power from the second motor generator MG2 is transmitted through the automatic transmission 3 as described below.

When the engagement clutch 8c of the automatic transmission 3 is in the disengagement state and the frictional clutch 9c is in the disengagement state, the vehicle is brought to a neutral state in which the motor power from the second motor generator MG2 is not transmitted from the transmission input shaft 7 to the transmission output shaft 6. It is possible to stop the vehicle.

Then, for example, when the engagement clutch 8c of the automatic transmission 3 is brought from the neutral state to the engagement state, the low speed stage by which the motor power from the second motor generator MG2 can be transmitted from the transmission input shaft 7 to the transmission output shaft 6 by the low speed gear pair 8a and 8b.

In this selection state of the low speed stage, the motor power to the transmission input shaft 7 is directed to driving wheels 14 through the low speed stage gear pairs 8a and 8b→the engagement clutch 8c in the engagement state→the transmission output shaft 6→the final drive gear set 11 and 12→the differential gear device 13. It is possible to run the vehicle at the low speed.

Moreover, for example, when the engagement clutch 8c of the automatic transmission 3 is brought from the selection state of the low speed stage to the disengagement state and the frictional clutch 9c is brought to the engagement state, the vehicle is brought to the selection state of the high speed stage at which it is possible to transmit the motor power from the second motor generator MG2 from the transmission input shaft 7 to the transmission output shaft 6 by the high speed stage gear pairs 9a and 9b.

In this section state of the high speed stage, the motor power to the transmission input shaft 7 is directed to the driving wheels 14 through the high speed stage gear pairs 9a and 9b→the frictional clutch 9c in the engagement state→the transmission output shaft 6→the final drive gear set 11 and 12→the differential gear device 13. It is possible to run the vehicle at the high speed.

At the regenerative braking during the low speed/high speed running, the load for the power generation is provided to the first motor generator MG1. With this, the first motor generator MG1 which is driven through the power distribution device 2 by the gear 9b rotating together with the transmission output shaft 6 constantly connected to the driving wheels 14 perform the power generation in accordance with the load for the power generation so as to perform a predetermined regenerative braking. Then, it is possible to store the generated electric power in the battery.

Besides, it is possible not only to use as the power generator as described above, but also serve as an electric motor arranged to compensate the power deficiency when the vehicle is in the driving state in which the power is deficient only by the power from the second motor generator MG2. In this case, the engine 1 can drive to compensate for the power deficiency, if necessary.

### [Foot Release Upshift Control Operation]

At the foot release upshift, the engagement clutch 8c is disengaged. However, when the torque acted from the driving wheels 14's side is large, the load which are equal to or greater than the assumed (supposed) value may be aced to the engagement clutch 8c and the mechanism arranged to disengage the engagement clutch 8c. Accordingly, it is necessary to devise to avoid the function of the load which is equal to or greater than the assumed value at the shift at which the engagement clutch 8c is disengaged. Hereinafter, the foot release upshift control operation to reflect this is explained.

First, when the foot is released from the accelerator pedal (the accelerator foot release operation) during the running at the low speed stage, the vehicle is shifted from the drive state to the coast state. The second motor generator MG2 performs the regeneration. If the regeneration efficiency is higher in a case where the regeneration is performed at the high speed stage at the running state at this time, the vehicle is shifted to the high speed stage. However, the torque is acted to the engagement clutch 8c after the vehicle is shifted to the regeneration state. Accordingly, it is necessary that the vehicle is shifted after the regenerative torque is dropped for the shift. That is, when the shift from the low speed stage to the high speed stage is performed after the shift to the regeneration state, the drop of the torque is generated.

Accordingly, when the accelerator foot release operation is performed during the running at the low speed stage so that the driving point A of FIG. 2 is shifted to the driving point B across the upshift line (the low speed stage →the high speed stage), the shift from the low speed stage to the high speed stage is performed when the torque acted from the second motor generator MG2 is zero at a time of the switching from the drive state to the coast state. At this time, when the torque from the driving wheels 14 is not acted, the torque acted to the engagement clutch 8c is minute. However, the torque is acted to the engagement clutch 8c when the longitudinal acceleration of the vehicle is varied by the variation of the gradient.

In this way, when the torque acted from the driving wheel 14's side is large, the frictional force is generated on the engagement surface of the engagement clutch 8c. Accordingly, the large load is acted to the mechanism to actuate the engagement clutch 8c.

Contrary to this, when the accelerator foot release operation is performed during the running at the low speed stage in the first embodiment and the upshift command from the low speed stage to the high speed stage is outputted, the process proceeds along step S1→step S2 →step S3 in the flowchart of FIG. 3. At this step S2, the torque acted to the engagement clutch 8c is estimated. At next step S3, while the torque estimation valuer ≥ the predetermined value is judged, the process repeats a flow of step S2→step S3.

Then, when the torque estimation value < the predetermined value is judged at step S3, the process proceeds from step S3 along step S4→step S5→step S6→ step S7. At step S4, the disengagement of the engagement clutch 8c is started. Moreover, the process repeats the flow of step S7→step S8→step S6 until the completion of the disengagement clutch 8c is judged at step S7. Then, when it is judged that the disengagement of the engagement clutch 8c is completed at step S7, the process proceeds from step S7 to the end.

As described above, in the first embodiment, at step S2, the torque acted to the engagement clutch 8c, including the torque acted from the second motor generator MG2 and the torque acted from the driving wheel 14's side is estimated. Then, when the torque aced to the engagement clutch 8c is equal to or greater than the predetermined value, the start of the upshift is retained even at the shift command by the predetermined upshift line. The start of the upshift is permitted when the torque acted to the engagement clutch 8c becomes smaller than the predetermined value.

With this structure, the engagement clutch 8c is disengaged after it is confirmed that the resistance force with respect to the clutch disengagement surely becomes small. Accordingly, it is possible to prevent the load which is equal to or greater than the assumed value, from acting to the engagement clutch 8c and the mechanism arranged to disengage the engagement clutch 8c.

Accordingly, at the foot release upshift at which the engagement clutch 8c is released, it is possible to suppress the generation of the damage due to the actuation of the load which is equal to or greater than the assumed value, to the engagement clutch 8c and the mechanism arranged to release the engagement clutch 8c, and thereby to ensure the reliability of the durability.

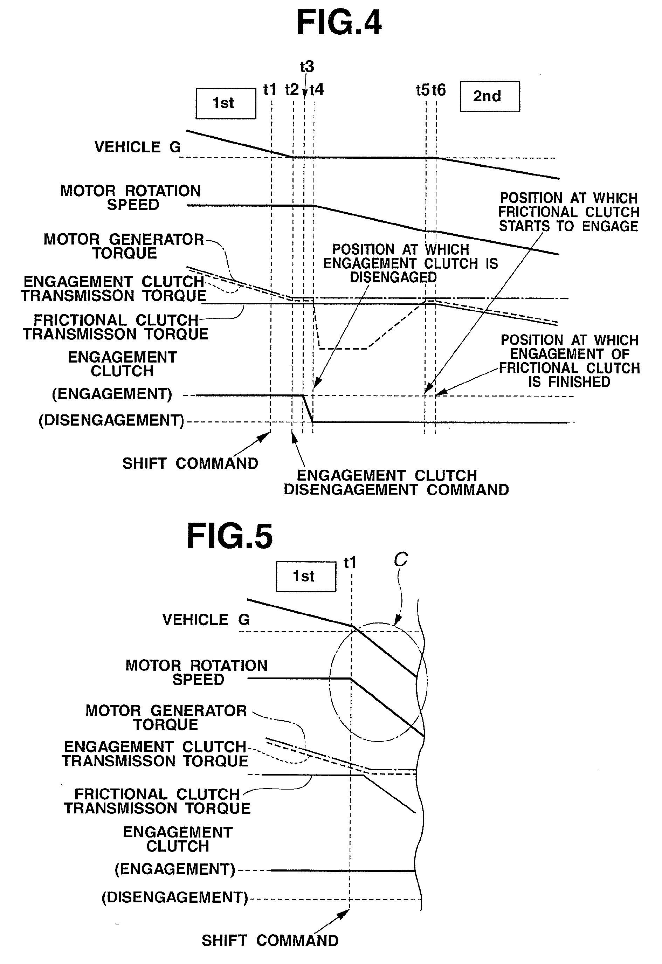

FIG. 4 shows a transition of the rotation speed and the torque when the vehicle is shifted from the low speed stage (1st) to the high speed stage (2nd) by the release of the foot from the accelerator.

The shift command is outputted at time t1 at which the low speed stage is selected. However, the motor generator torque and the vehicle G are outputted at time t1. Accordingly, the disengagement command of the engagement clutch 8c is not outputted. However, at time t2, the motor generator torque and the vehicle G become equal to or smaller than the constant value near zero. Consequently, the disengagement command of the engagement clutch 8c is outputted at time t2. After the disengagement command of the engagement clutch 8c is outputted, the actual release (the actual disengagement) of the engagement clutch 8c is started at time t3. At time t4 immediately after time t3, the actual release of the engagement clutch 8c is completed.

From this time t4 at which the actual release of the engagement clutch 8c is completed, to a time t5 at which the engagement of the frictional clutch 9c is started, the motor generator torque enters from zero to the negative value (the regenerative state), and again returns to zero. Then, the engagement of the frictional clutch 9c is started at time t5, and the engagement of the frictional clutch 9c is completed at time t6. The vehicle is shifted to the high speed stage. Besides, after time t6 at which the shift to the high speed stage is completed, the motor generator torque enters from zero to the negative value (the regenerative state) again.

### [Operation of Estimation of Torque Aced to Engagement Clutch]

As described above, in the first embodiment, it is necessary to estimate the torque acted to the engagement clutch 8c in a state in which the engagement clutch 8c is engaged by the meshing. Accordingly, it is necessary to devise to estimate the torque acted to the engagement clutch 8c at the high accuracy. Hereinafter, the operation of the estimation of the torque acted to the engagement clutch to reflect this is explained.

For example, Japanese Patent Application Publication No. 2010-89576 described above is a comparative example. In this comparative example, the torque is provided from the motor generator, and the torque acted to the dog clutch is estimated in a state in which the torque acted to the dog clutch is varied.

In this comparative example, the torque acted to the dog clutch is estimated by the torque provision from the power source side. Accordingly, the torque is provided to the dog clutch from the output shaft side in accordance with the variation of the running state of the vehicle. When the torque which is equal to or greater than the assumed value is acted, the error is generated in the estimation of the torque acted to the dog clutch.

Contrary to this, in the first embodiment, at step S2 of FIG. 3, the torque acted to the engagement clutch 8c is estimated by one of
(a) the input torque from the second motor generator MG2 to the engagement clutch 8c, and the longitudinal acceleration of the vehicle (the vehicle G)
(b) the input torque from the second motor generator MG2 to the engagement clutch 8c, and the variation amount of the rotation speed of the driving system (the variation amount of the motor rotation speed).

That is, when the running state of the vehicle is varied by the road surface gradient and so on, the torque is transmitted from the driving wheel 14's side to the engagement clutch 8c. At this time, in the longitudinal acceleration of the vehicle (vehicle G) and the variation amount of the rotation speed of the driving system (the variation amount of the rotation speed of the motor), the vehicle G is decreased, and the motor rotation speed is decreased, as shown by characteristics surrounded by an arrow C of FIG. 5. Accordingly, it is possible to estimate the input torque from the driving wheel 14's side to the engagement clutch 8c, by adding the longitudinal acceleration of the vehicle (the vehicle G) and the variation amount of the rotation speed of the driving system (the variation amount of the rotation speed of the motor), to the estimation of the torque acted to the engagement clutch 8c.

Accordingly, when the torque acted to the engagement clutch 8c is estimated, the input torques of both of the input torque from the second motor generator MG2 and the input torque from the driving wheel 14's side are considered. Consequently, it is possible to estimate the torque at the high accuracy.

Incidentally, when the vehicle G and the rotation speed of the motor are decreased as shown in FIG. 5, the command of the disengagement of the engagement clutch 8c is not outputted even at the shift command.

### [Operation of Diagnosis of Failure of Engagement Clutch]

The engagement clutch 8c mechanically engaged by the meshing have the higher failure frequency relative to the frictional clutch 9c which is engaged by the pressing frictional force. Accordingly, there is a request of a failure diagnosis of the engagement clutch 8c. Hereinafter, the failure diagnosis operation of the engagement clutch 8c to reflect this is explained.

As described above, in a case where the operation to disengage the engagement clutch 8c is performed when the torque acted to the engagement clutch 8c is smaller than the predetermined value, the disengagement of the engagement clutch 8c is completed during a short time period having little variation as long as the engagement clutch 8c and the disengagement mechanism are in the normal state.

That is, in a case in which the disengagement of the engagement clutch 8c is not completed even when the setting time period is elapsed from the start of the operation to disengage the engagement clutch 8c, it is judged that any failure is generated in the engagement clutch 8c.

The failure diagnosis of the engagement clutch 8c in the first embodiment focuses on this matter. In a case where the engagement clutch 8c is in the failure state, the process repeats the flow of step S7→step S8→step S6 in the flowchart of FIG. 3 since the disengagement of the engagement clutch 8c is not completed. Then, when it is judged that the timer value T is equal to or greater than the clutch failure judgment threshold value T0 at step S8, the process proceeds to step S9. It is diagnosed that the engagement clutch 8c is in the failure.

Accordingly, it is possible to surely diagnose that the failure is generated in the engagement clutch 8c and the disengagement mechanism, only by monitoring the elapsed time period from the start of the disengagement of the engagement clutch 8c.

Next, effects are explained.

In the shift control device of the hybrid vehicle according to the first embodiment, it is possible to obtain effects described below.
(1) In a shift control device of a vehicle (hybrid vehicle) provided with an automatic transmission 3 disposed in a driving system from a driving source (second motor generator MG2), and a shift control means (controller 21, FIG. 3) arranged to perform the shift control of the automatic transmission 3, the shift control means (the controller 21, FIG. 2) is configured to retain the start of the shift while the torque which is equal to or greater than the predetermined value is acted to the engagement clutch 8c when the shift command to shift by the disengagement of the engagement clutch 8c which is engaged by the meshing is outputted, and to start the shift when the torque acted to the engagement clutch 8c becomes smaller than the predetermined value.
   Therefore, at the shift to disengage the engagement clutch 8c, it is possible to ensure the reliability of the durability of the engagement clutch 8c and the mechanism arranged to release the engagement clutch 8c.
(2) The shift control means (the controller 21, FIG. 3) includes a torque estimation section (step S2 of FIG. 3) configured to estimate the torque acted to the engagement clutch 8c when the upshift command from the low speed stage to the high speed stage is outputted at the accelerator foot release operation, and a foot release upshift control section (step S4 of FIG. 3) configured to set the predetermined value to a value corresponding to a resistance force which does not provide the load which is equal to or greater than the assumed value, to the clutch disengagement mechanism when the engagement clutch 8c is disengaged, and to start the foot release upshift by the disengagement of the engagement clutch 8c when the torque estimation value estimated at the torque estimation section (YES at step S3 of FIG. 3) becomes smaller than the predetermined value.

Therefore, in addition to the effect (1), at the accelerator foot release upshift to disengage the engagement clutch 8c, it is possible to decrease the load acted to the engagement clutch 8c and the mechanism arranged to disengage the engagement clutch 8c.

The shift control means (the controller 21, FIG.3) includes an engagement clutch failure diagnosis section (step S9 of FIG. 3) configured to diagnose that the engagement clutch 8c or the mechanism arranged to disengage the engagement clutch 8c is in the failure when the engagement clutch 8c is not disengaged when the elapsed time period from the start of the foot release upshift by the disengagement of the engagement clutch 8c exceeds a setting time period (YES at step S8 of FIG. 3).

Accordingly, in addition to the effect (2), it is possible to surely diagnose that the failure is generated in the engagement clutch 8c and the disengagement mechanism only by monitoring the elapsed time period from the start of the disengagement of the engagement clutch 8c.
(4) The torque estimation section (step S2 of FIG. 3) is configured to estimate the torque acted to the engagement clutch 8c based on the input torque from the driving source (the second motor generator MG2) to the engagement clutch 8c, and the longitudinal acceleration of the vehicle.
   Therefore, in addition to the effect (2) or (3), it is possible to perform the torque estimation at the high accuracy in consideration of the input torque from the second motor generator MG2, and the input torque from the driving wheel 14's side.
(5) The torque estimation section (step S2 of FIG. 3) is configured to estimate the torque acted to the engagement clutch 8c, based on the input torque from the driving source (the second motor generator MG2) to the engagement clutch 8c, and the variation amount of the rotation speed of the driving system (the decrease amount of the rotation speed of the motor).

Therefore, in addition to the effect (2) or (3), it is possible to perform the torque estimation at the high accuracy in consideration of the input toque from the second motor generator MG2, and the input torque from the driving wheel 14's side.

Hereinabove, although the shift control device for the vehicle according to the first embodiment of the present invention is explained, the concrete structures are not limited to this first embodiment. The variation, the addition and so on of the design are permissible as long as it is not deviated from the gist of the present invention described in the claims.

The first embodiment exemplifies, as the shift control means, an example which is performed at the accelerator foot release upshift in which the engagement clutch 8c is disengaged. However, as the shift control means, the shift control according to the present invention can be performed at an accelerator foot release downshift, at an accelerator depression upshift, and at an accelerator depression downshift as long as it is the shift in which the engagement clutch is disengaged. Besides, at the upshift and the downshift by the accelerator depression, the target torque of the driving source is zero, and the torque acted to the engagement clutch is estimated.

The first embodiment shows the example in which the decreasing amount of the motor rotation speed is used as the variation amount of the rotation speed of the driving system which is used in the torque estimation section. However, the variation amount of the rotation speed of the driving system which is used in the torque estimation section may be the variation amount of the rotation speed of the member which is in the driving system to the driving wheels, such as the variation amount of the rotation speed of the output shaft of the transmission.

In the first embodiment, the two stepped automatic transmission having the low side shift stage and the high side shift stage is exemplified as the automatic transmission. However, the automatic transmission may be an automatic transmission having a plurality of shift stages larger than the two step, as long as the automatic transmission has the shift stage in which the engagement clutch is disengaged at the shift.

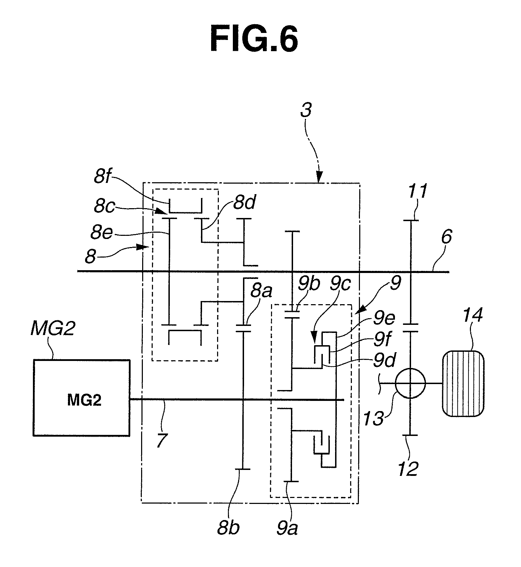

In the first embodiment, the shift control device according to the present invention is applied to the hybrid vehicle. However, the shift control device according to the present invention is applicable to an electric vehicle which includes an electric motor in the driving system, for example, an electric vehicle which is shown in FIG. 6, and which includes a driving system in which the engine 1, the first motor generator MG1, and the power distribution device 2 are excluded from the driving system of the first embodiment. Moreover, the shift control device according to the present invention is applicable to an engine vehicle which includes an engine in the driving system.

### Reference Patent Application

The present invention claims, as priority, a Japanese Patent Application No. 2012-43918 filed with Japanese Patent Office on February 29, 2012. The entire disclosure of that are incorporated in this specification by reference.

## Claims

1. A shift control device for a vehicle which includes an automatic transmission disposed in a driving system from a driving source, and a shift control means configured to perform a shift control of the automatic transmission, the shift control device comprising:
the shift control means being configured to retain a start of the shift while a torque which is equal to or greater than a predetermined value is acted to an engagement clutch when a shift command to shift by a disengagement of the engagement clutch engaging by meshing is outputted, and to allow the start of the shift when the torque acted to the engagement clutch becomes smaller than the predetermined value.

2. The shift control device for the vehicle as claimed in Claim 1, wherein the shift control means includes a torque estimation section configured to estimate the torque acted to the engagement clutch when an upshift command from a low shift stage to a high shift stage is outputted at an accelerator foot release operation, and a foot release upshift control section configured to set the predetermined value to a value corresponding to a resistance force which does not provide a load that is equal to or greater than an assumed value, to the clutch disengagement mechanism when the engagement clutch is disengaged, and to start the foot release upshift by the disengagement of the engagement clutch when the torque estimation value estimated by the torque estimation section becomes smaller than the predetermined value.

3. The shift control device for the vehicle as claimed in Claim 2, wherein the shift control means includes an engagement clutch failure diagnosis section configured to diagnose that the engagement clutch or a mechanism arranged to disengage the engagement clutch is in failure when the engagement clutch is not disengaged even when an elapsed time period from the start of the foot release upshift by the disengagement of the engagement clutch exceeds a setting time period.

4. The shift control device for the vehicle as claimed in Claim 2 or 3, wherein the torque estimation section is configured to estimate a torque acted to the engagement clutch based on an input torque from the driving source to the engagement clutch, and a longitudinal acceleration of the vehicle.

5. The shift control device for the vehicle as claimed in Claim 2 or 3, wherein the torque estimation section is configured to estimate the torque acted to the engagement clutch based on an input torque from the driving source to the engagement clutch, and a variation amount of a rotation speed of the driving source.
